# EUROPEAN PATENT APPLICATION

(11) **EP 4 459 564 A1**
(43) Date of publication of application: **06.11.2024**
(21) Application number: 22913502.5
(22) Date of filing: 13.09.2022
(51) Int. Cl.: G06V 10/25, G06V 10/44, G06T 7/62

(54) **CIRCLE SEARCHING METHOD AND APPARATUS, ELECTRONIC DEVICE AND STORAGE MEDIUM**

(30) Priority: 31.12.2021 CN 202111683480
(71) Applicant: Hangzhou Hikrobot Co., Ltd., Hangzhou, Zhejiang 310051 (CN)
(72) Inventor: SHAO, Junjie, Hangzhou, Zhejiang 310051 (CN); DENG, Zhihui, Hangzhou, Zhejiang 310051 (CN)
(74) Representative: Epping - Hermann - Fischer
(86) International application number: PCT/CN2022/118332
(87) International publication number: WO 2023/124233

(57) **Abstract**

Embodiments of the present application provide a circle search method, apparatus, an electronic device and a storage medium, which are applied in the field of information technology, and capable of acquiring a target reference point in a to-be-identified image, wherein the to-be-identified image comprises a circular pattern, the target reference point is arranged in a preset range of an edge of the circular pattern; performing edge extraction based on the target reference point as a reference to obtain at least three target edge points; and performing circle fitting based on the at least three target edge points to obtain a fitted circle. Therefore, circle search can be achieved by a user merely inputting a point near an edge of one circular pattern, thus simplifying the user operation process.

## Description

The present application claims the priority to a Chinese patent application No. 202111683480.2 filed with the State Intellectual Property Office of People's Republic of China on December 31, 2021, and entitled "CIRCLE SEARCH METHOD, APPARATUS, ELECTRONIC DEVICE AND STORAGE MEDIUM", which is incorporated herein by reference in its entirety.

### Technical Field

The present application relates to the field of information technology, particularly to a circle search method, apparatus, an electronic device, and a storage medium.

### Background

In the field of machine vision, by identifying a circular pattern, positioning and measurement can be performed based on an identification result. For example, the coordinate position of the object to be identified can be determined by using the center of the circular pattern on the identified object to be identified as a reference point.

However, currently when identifying a circular pattern, it often needs a user to make multiple inputs. For example, through inputting the position of the center of the circle and inputting a radius of the circular pattern in a manner of dragging a mouse and so on by the user, a to-be-identified region is calculated, and then the circular pattern is identified in the to-be-identified region. The operations are complex.

### Summary

The purpose of embodiments of the present application is to provide a circle search method, apparatus, an electronic device, and a storage medium to solve a problem of complex operation in the process of circular pattern identification. The specific technical solutions are as follows:
A first aspect of an embodiment of the present application first provides a circle search method, which includes:
acquiring a target reference point in a to-be-identified image, wherein the to-be-identified image contains a circular pattern, and the target reference point is arranged in a preset range of an edge of the circular pattern;
performing edge extraction based on the target reference point as a reference to obtain at least three target edge points;
performing circle fitting based on the at least three target edge points to obtain a fitted circle.

A second aspect of an embodiment of the present application provides a circle search apparatus, which includes:
a reference point acquiring module, configured for acquiring a target reference point in a to-be-identified image, wherein the to-be-identified image contains a circular pattern, and the target reference point is arranged in a preset range of an edge of the circular pattern;
an edge point selecting module, configured for performing edge extraction based on the target reference point as a reference to obtain at least three target edge points;
a circle fitting module, configured for performing circle fitting based on the at least three target edge points to obtain a fitted circle.

In another aspect of an embodiment of the present application, it is further provided an electronic device, which includes a processor, a communication interface, a memory, and a communication bus, wherein the processor, the communication interface, and the memory communicate with each other through the communication bus;
the memory is configured for storing a computer program;
the processor is configured for implementing any step of the above circle search method when the program stored on the memory is executed by the processor.

In another aspect of an embodiment of the present application, it is further provided a computer-readable storage medium, which stores a computer program therein, wherein the computer program, when executed by the processor, implements any step of the above circle search method.

In another aspect of an embodiment of the present application, it is further provided a computer program product containing instructions, which when running on a computer, cause the computer to carry out any step of the above circle search method.

Beneficial effects of embodiments of the present application are as follows:
The embodiments of the present application provide a circle search method, apparatus, an electronic device and a storage medium, and capable of acquiring a target reference point in a to-be-identified image, wherein the to-be-identified image includes a circular pattern, the target reference point is arranged in a preset range of an edge of the circular pattern; performing edge extraction based on the target reference point as a reference to obtain at least three target edge points; and performing circle fitting based on the at least three target edge points to obtain a fitted circle. Therefore, circle search can be achieved by a user merely inputting points near an edge of one circular pattern, thus simplifying the user operation process.

Of course, it is not necessary for any product or method implementing the present application to achieve all the advantages described above simultaneously.

### Brief Description of the Drawings

In order to more clearly describe technical solutions of the embodiments of the present invention and the prior art, accompanying drawings that need to be used in the embodiments and the prior art will be briefly described below. Obviously, accompanying drawings described below are for only some of embodiments of the present invention. Those skilled in the art may also obtain other accompanying drawings based on these accompanying drawings without any creative efforts.
Figure 1 is a schematic diagram of a flow of a circle search method provided by an embodiment of the present application;
Figure 2 is a schematic diagram of a flow of a circle search method provided by an embodiment of the present application;
Figure 3 is an instance diagram of a circle search method provided by an embodiment of the present application;
Figure 4 is a schematic diagram of a flow of generating a to-be-identified region provided by an embodiment of the present application;
Figure 5 is another instance diagram of a circle search method provided by an embodiment of the present application;
Figure 6 is a schematic diagram of a structure of a circle search apparatus provided by an embodiment of the present application;
Figure 7 is a schematic diagram of a structure of an electronic device provided by an embodiment of the present application.

### Detailed Description

In order to make the purpose, technical solutions and advantages of the present invention clearer and more understandable, the present invention will be described in more detail below with reference to the accompanying drawings and embodiments. Obviously, the described embodiments are only some, and not all, of the embodiments of the present invention. All other embodiments obtained based on the embodiments of the present invention by those skilled in the art without any creative efforts fall into the scope of protection of the present invention.

Firstly, possible terms used in the embodiments of the present application are explained:
Single point: one point in pixel coordinates.
Circle search: a process in which a specific position of a circle is located, and a center position and a radius length of the circle are provided.
ROI (region of interest): one defined region in which an algorithm performs operations.
Search point: a point near the circumference provided by the user, used to search for a circle.
Chessboard distance: a maximum value from an absolute value of abscissa difference and an absolute value of ordinate difference between two pixel points.
RANSAC (Random Sample Consensus): estimating a parameter of a mathematical model from a set of observed data containing an outlier in an iterative manner.

It is directed to solving the problem in the prior art that, when identifying a circular pattern, it needs a user to make multiple inputs, and the operation is complex.

A first aspect of an embodiment of the present application provides a circle search method, which includes:
acquiring a target reference point in a to-be-identified image, wherein the to-be-identified image contains a circular pattern, and the target reference point is arranged in a preset range of an edge of the circular pattern (i.e. circumference of the circular pattern);
performing edge extraction based on the target reference point as a reference to obtain at least three target edge points;
performing circle fitting based on the at least three target edge points, to obtain a fitted circle.

It can be seen that, through the method of the embodiment of the present application, searching for a circle can be achieved by a user merely inputting points near an edge of one circular pattern, thereby simplifying the operation flow of the user.

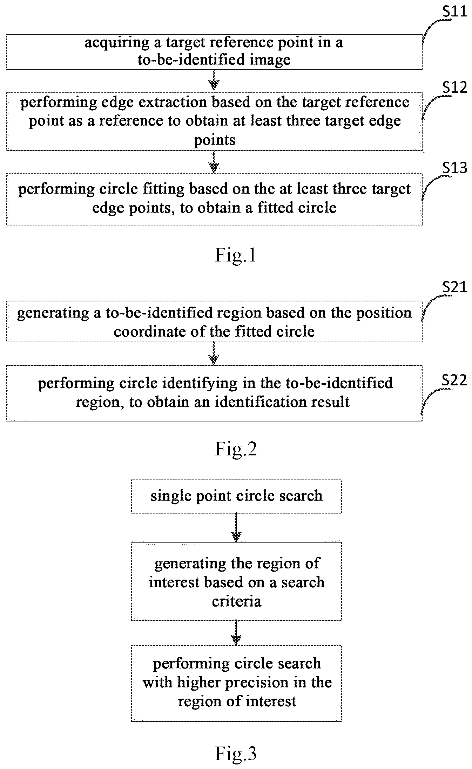

Specifically, referring to Figure 1, it is a schematic diagram of a flow of a circle search method provided by an embodiment of the present application, which includes:
Step S 11, acquiring a target reference point in a to-be-identified image.

The to-be-identified image in the embodiment of the present application is an image including a circular pattern. The target reference point is a single point, which can be manually input. Specifically, one point in the to-be-identified image can be marked as a reference point through manual touch or mouse clicking, or marked as a reference point by inputting a coordinate position of a reference point through a keyboard, and the like. When the method of the embodiment of the present application is applied to a device such as a smart phone, the target reference point can also be manually selected through touching a screen, and the like. In practical use, a user only need to input one point near an edge of one circular pattern as a target reference point. Specifically, this point can be either an point on the edge or not. In practical use, the target reference point can be set either on the edge of the circular pattern that needs to be identified, or in a preset range of the edge of the circular pattern that needs to be identified. The preset range can be preset. Specifically, the preset range can include both the target reference point and the points on the edge of the circular pattern.

In a process of searching for a circle by a traditional method, it is generally necessary to arrange reference points on the center and circumference of the circle, in order to determine the center coordinate and the radius of the circle, and then search for a circle based on the determined center and the radius of the circle. However, due to user's operation errors, it is often difficult to accurately arrange the reference point at the center of the circle, resulting in multiple operations, complex operations, and errors. The method of the embodiment of the present application only needs to arrange the reference point within the preset range of the circumference to achieve the selection of the target reference point, thereby simplifying the operation process and improving the user experience.

The method of the embodiment of the present application, which is applied to a smart terminal, can be implemented through the smart terminal. Specifically the smart terminal can be a computer, a mobile phone, a server, or a smart camera, etc.

Step S12, performing edge extraction based on the target reference point as a reference, to obtain at least three target edge points.

Wherein the to-be-identified image contains a circular pattern, and the target reference point is arranged in a preset range of the edge of the circular pattern (i.e. the circumference of the circular pattern). Specifically, the preset range can be a first preset range. Optionally, performing edge extraction based on the target reference point as a reference, to obtain at least three target edge points includes: performing pixel gradient identification on individual pixel points within the first preset range around the target reference point in the to-be-identified image, to obtain a first edge point, wherein a pixel gradient of the first edge point is greater than a preset gradient threshold; performing pixel gradient identification on individual pixel points within a second preset range around the first edge point, to obtain multiple second edge points; selecting at least three target edge points from the first edge point and the multiple second edge points. Optionally, performing edge extraction based on the target reference point as a reference, to obtain at least three target edge points includes: receiving to-be-identified region information from the user, wherein to-be-identified region information includes the size and position of the to-be-identified region input by the user; performing edge extraction in the to-be-identified region based on the target reference point as a reference, to obtain at least three target edge points.

Pixel gradient identification is performed on individual pixel points within the first preset range around the target reference point in the to-be-identified image, to obtain the first edge point. Wherein a pixel gradient of the first edge point is greater than a preset gradient threshold. In the embodiment of the present application, pixel gradient identification is performed on individual pixel points within the first preset range around the target reference point in the to-be-identified image, which can be performed by identifying a pixel value of individual pixel point within the first preset range around the target reference point in the to-be-identified image through a preset detection algorithm, and then calculating a pixel gradient corresponding to the pixel point based on the identified pixel value. In practical use, the pixel gradients of individual pixel points can be calculated by calculating a Sobel operator. Specifically, the preset detection algorithm can be any edge point detection algorithm, such as a canny algorithm (one kind of edge detection algorithms). In one example, pixel gradient identification is performed on individual pixel points within the first preset range around the target reference point in the to-be-identified image, which can be performed by sequentially searching for a pixel point with a chessboard distance of 0, 1, 2... from the target reference point, and determining whether the pixel point is an edge point until the first edge point is obtained. Wherein, the first edge point can include multiple pixel points.

Wherein the size of the first preset range can be set according to the actual situation. In one example, the smaller the range of a circle to be identified is, the smaller the first preset range should be, and the larger the range of a circle to be identified is, the larger the first preset range should be. For example, if the range of the to-be-identified image is large and the range of the circular pattern to be identified is small, only a small range of points around the target reference point can be identified by setting the first preset range. This can not only accelerate the search for the edge point, but also reduce working memory and computational complexity. When the range of the circular pattern to be identified is large, a larger range should be identified around the target reference point.

Optionally, performing pixel gradient identification on individual pixel points within the first preset range around the target reference point in the to-be-identified image, to obtain the first edge point includes: performing pixel gradient identification on individual pixel points in multiple preset directions within the first preset range around the target reference point in the to-be-identified image, to obtain the first edge point. Optionally, performing pixel gradient identification on individual pixel points on multiple preset directions within the first preset range around the target reference point in the to-be-identified image, to obtain the first edge point includes: selecting, within the first preset range around the target reference point in the to-be-identified image, a direction every preset angle span based on a preset reference direction, to obtain multiple target directions; performing pixel gradient identification on individual pixel points in the preset reference direction and multiple target directions, to obtain the first edge point. In one example, the preset direction can refer to one or more of eight directions, which are four directions relative to the target reference point: top, bottom, left, right, and four directions with a 45° interval between adjacent directions.

Pixel gradient identification is performed on individual pixel points within a second preset range around the first edge point, to obtain multiple second edge points. The size of the second preset range can be the same or different from that of the first preset range. When searching for multiple second edge points within the second preset range around the first edge point, the first edge point can be used as a starting point to search for other edge points on the circumferential contour. During the search, all of edge points can be searched for so that the edge points are at various positions on the circumference of the circle. Pixel gradient identification can be performed on individual pixel points within a second preset range around the first edge point through any of the edge point detection algorithms mentioned above, such as the canny algorithm.

Optionally, performing pixel gradient identification on individual pixel points within a second preset range around the first edge point to obtain multiple second edge points includes: performing pixel gradient identification on individual pixel points in clockwise and counterclockwise directions within a second preset range around the first edge point, to obtain multiple second edge points. Wherein when a radius of the circular pattern is relatively large, these edge points can be sampled, and then only the sampled edge points are retained, thereby reducing memory consumption and the amount of the subsequent computation.

At least three target edge points are selected from the first edge point and the multiple second edge points. During performing the circle fitting, since it is required for at least three edge points to fit a circle, after acquiring the first edge point and the multiple edge points, it is necessary to select three edge points for performing the circle fitting. The selected at least three target edge points can be the first edge point and the multiple second edge points, or at least three of the second edge points. Wherein, when selecting at least three target edge points from the first edge point and the multiple second edge points, three edge points can be selected from the first edge point and the multiple second edge points as target edge points by means of random selection.

Step S 13, performing circle fitting based on the at least three target edge points, to obtain a fitted circle.

Wherein, a circle fitting is performed based on the at least three target edge points, which can be performed by using multiple preset circle fitting methods for performing the fitting, such as least squares method or RANSAC based least squares method, to obtain a fitted circle and a parameter of the fitted circle, such as a radius and a center coordinate. Then the parameter of the fitted circle is used as a parameter of the circular pattern in the to-be-identified image.

When selecting at least three edge points from the first edge point and the multiple second edge points as target edge points, a down-sampling method can be used to select at least three edge points from the first edge point and the multiple second edge points as target edge points. Optionally, selecting at least three target edge points from the first edge point and the multiple second edge points includes: down-sampling multiple second edge points to obtain at least three third sampled edge points. And performing the circle fitting based on the at least three target edge points to obtain a fitted circle includes: performing circle fitting based on the at least three third sampled edge points to obtain a fitted circle. Since the number of the down-sampled third edge points is smaller than that of the second edge points. When down-sampling, down-sampling can be performed based on the distance between the third edge points so that the sampled third edge points are evenly distributed on the fitted circle as much as possible. Therefore, down-sampling can be used to reduce the number of second edge points that need to be calculated and saved, thereby reducing memory consumption and the amount of the subsequent computation, and improving fitting efficiency.

It can be seen that through the method of the embodiment of the present application, the user only needs to input one target reference point, and the first edge point and the multiple second edge points can be automatically identified, so as to fit the circle by identifying the first edge point and the second edge points, to obtain a parameter of the circle in the to-be-identified image, thereby simplifying the user's operation process.

Optionally, referring to Figure 2, the parameter of the fitted circle include position coordinate of the fitted circle. After performing the circle fitting based on the at least three target edge points, to obtain a fitted circle, the above method further includes:
Step S21, generating a to-be-identified region based on the position coordinate of the fitted circle;
Step S22, performing circle identifying in the to-be-identified region to obtain an identification result, wherein the identification result includes the parameter of the identified circle.

Optionally, the position coordinate of the fitted circle include center coordinate of the fitted circle and the radius of the fitted circle, generating a to-be-identified region based on the position coordinate of the fitted circle includes: performing calculation based on the radius of the fitted circle to obtain a feature parameter of a to-be-identified region to be generated with a preset shape, wherein the preset shape is a circle or a rectangle, and the feature parameter is the radius of the circle or the length and width of the rectangle; generating the to-be-identified region by using the center coordinate of the fitted circle as the center of the to-be-identified region to be generated. Wherein, when performing calculation based on the radius of the fitted circle to obtain a feature parameter of a to-be-identified region to be generated with a preset shape, the to-be-identified region to be generated with a preset shape can include the entire fitted circle. For example, when the preset shape is circular, the radius of the circle corresponding to the to-be-identified region with the preset shape is greater than the radius of the fitted circle. For example, when the radius of the fitted circle is 4, the radius of a circle corresponding to the to-be-identified region with the preset shape obtained after performing the calculation can be 5. For another example, when the radius of the fitted circle is 4, the length and width of the rectangle corresponding to the to-be-identified region with the preset shape obtained after performing the calculation are both greater than twice the radius of the fitted circle. For example, when the radius of the fitted circle is 4, the length and width of the rectangle corresponding to the to-be-identified region with the preset shape can be 9 and 10, respectively.

Wherein, the above-mentioned to-be-identified region can be of various shapes. For example, the to-be-identified region can be circular, annular, square, rectangular, etc. When generating the to-be-identified region, the range of the to-be-identified region should include the range of the circular pattern in the to-be-identified image.

Optionally, performing the circle identifying in the to-be-identified region to obtain an identification result, includes: comparing the area of the to-be-identified region with that of the fitted circle; when the ratio of the area of the to-be-identified region to that of the fitted circle is greater than a preset threshold, generating an updated to-be-identified region based on the target reference point and the size of the preset region; identifying the circle in the updated to-be-identified region, to obtain the identification result. In one example, the smaller the range of the circle required to be identified is, the smaller the first preset range should be, and the larger the range of the circle required to be identified is, the larger the first preset range could be. For example, if the range of the to-be-identified image is large and the range of the circular pattern required to be identified is small, points only in a small range around the target reference point can be identified by setting the first preset range. This can not only accelerate searching for an edge point, but also reduce working memory and the amount of the computation. When the range of the circular pattern required to be identified is large, a larger range around the target reference point should be identified.

In the embodiment of the present application, when identifying a circular pattern in the to-be-identified region through a preset identification methods, the above preset identification methods can be various methods for image identification, such as RANSAC, etc. In the embodiment of the present application, as shown in Figure 3, after generating a ROI based on the parameter of the circular pattern, circle search with higher precision can be performed in the ROI.

It can be seen that through the method of the embodiment of the present application, the to-be-identified region can be generated based on the position coordinate of the fitted circle, and then the circle can be identified in the to-be-identified region to obtain the identification result, so that by identifying the circular pattern in the to-be-identified region, not only can the identification result be obtained, and the accuracy of the parameter of the identified circle be improved, but also by selecting the to-be-identified region, the circle can be searched for in the to-be-identified region without the need to search throughout the entire image, thereby reducing the amount of the computation and improving computational efficiency.

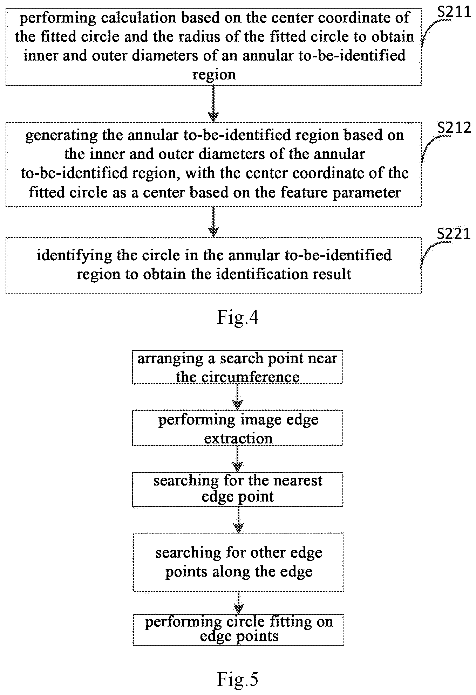

Optionally, referring to Figure 4, the position coordinate of the fitted circle include center coordinate of the fitted circle and the radius of the fitted circle, generating a to-be-identified region based on the position coordinate of the fitted circle includes:
Step S211, performing calculation based on the center coordinate of the fitted circle and the radius of the fitted circle to obtain inner and outer diameters of an annular to-be-identified region;
Step S212, generating the annular to-be-identified region based on the inner and outer diameters of the annular to-be-identified region, with the center coordinate of the fitted circle as a center based on the feature parameter;
Step S22, performing circle identifying in the to-be-identified region to obtain an identification result includes:
   Step S221, identifying the circle in the annular to-be-identified region to obtain the identification result.

Optionally, performing calculation based on the center coordinate of the fitted circle and the radius of the fitted circle to obtain inner and outer diameters of an annular to-be-identified region includes: calculating the sum of the radius of the fitted circle and the width of a preset annular region, to obtain the outer diameter of the to-be-identified region; calculating the difference between the radius of the fitted circle and the width of the preset annular region, to obtain the inner diameter of the to-be-identified region.

Based on the radius of the circular pattern and a preset length, the inner and outer diameters of the annular region to be generated are calculated, which can be performed by subtracting one preset value from the radius of the circular pattern to obtain the inner diameter of the annular region to be generated, and by adding the preset value to the radius of the circular pattern to obtain the outer diameter of the annular region to be generated. Specifically, the preset value can be set according to the actual situation. In one example, the size of the preset value corresponds to the radius of the circle. The larger the radius of the circle is, the larger the preset value can be, and the smaller the radius of the circle is, the smaller the preset value can be. Then, an annular to-be-identified region is generated based on the inner and outer diameters of the annular to-be-identified region, with the center coordinate of the fitted circle as a center. In the embodiment of the present application, the generated annular region includes all edge points of the circular pattern.

A circle is identified in the annular to-be-identified region, to obtain the identification result, which can be performed by identifying the circular pattern in the annular to-be-identified region through the above preset identification method, to obtain the identification result. Specifically, it can be performed by identifying the circular pattern in the annular to-be-identified region through image identification method such as RANSAC. In the embodiment of the present application, the identification result may include parameters such as the radius of the circle and the center coordinate of the circle. Since the annular region includes all of edge points of the circular pattern, and the area of the annular region is small, the region required to be identified is small, the identification efficiency is higher.

It can be seen that according to the method of the embodiment of the present application, based on the center coordinate of the fitted circle and the radius of the fitted circle, the inner and outer diameters of the annular to-be-identified region can be calculated; the annular to-be-identified region is generated based on the inner and outer diameters of the annular to-be-identified region, with the center coordinate of the fitted circle as a center; identifying the circle in the annular to-be-identified region, to obtain the identification result, which can reduce the region required to be identified and improve identification efficiency.

Referring to Figure 5, it is another instance diagram of a circle search method provided by an embodiment of the present application, including:
1. arranging a search point near the circumference; the search point in the present application is located near the circumference of the circular pattern.
2. performing image edge extraction; when the image to be detected is large, and the diameter of the circle required to be searched for is relatively small that occupies only a small part of the entire image region, only an region near the search point arranged by the user can be extracted to reduce working memory and the amount of the computation.
3. searching for the nearest edge point; specifically, a point with a chessboard distance of 0, 1, 2... from the search point can be searched for in sequence, or along fixed 8 directions (with a 45° interval between adjacent directions) to obtain a point on the circumference.
4. searching for other edge points along the edge; the edge points are searched in both clockwise and counterclockwise directions, and then the searched edge points are saved. Optionally, if the radius of the circle to be searched is relatively large, these edge points can be sampled, and only the sampled edge points are retained, thereby it can reduce memory consumption and the amount of the subsequent computation.
5. performing circle fitting on edge points; performing a circle fitting on the retained edge points, there are various methods of performing a circle fitting, such as least squares or RANSAC based least squares, to obtain the result of circle search at this single point.

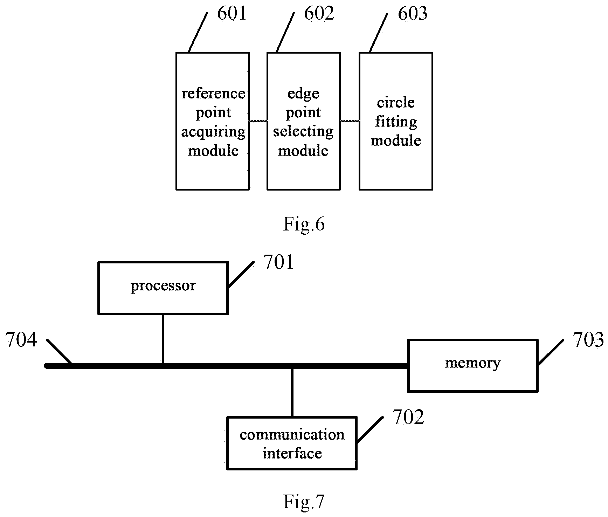

A second aspect of an embodiment of the present application provides a circle search apparatus, referring to Figure 6, which includes:
a reference point acquiring module 601, configured for acquiring a target reference point in a to-be-identified image, wherein the to-be-identified image contains a circular pattern, and the target reference point is arranged in a preset range of an edge of the circular pattern;
an edge point selecting module 602, configured for performing edge extraction based on the target reference point as a reference to obtain at least three target edge points;
a circle fitting module 603, configured for performing circle fitting based on the at least three target edge points to obtain a fitted circle.

Optionally, the edge point selecting module 602 includes:
a first edge point detecting module, configured for performing pixel gradient identification on individual pixel points within a first preset range around the target reference point in the to-be-identified image, to obtain the first edge point, wherein a pixel gradient of the first edge point is greater than a preset gradient threshold.
a second edge point detecting module, configured for performing pixel gradient identification on individual pixel points within a second preset range around the first edge point to obtain multiple second edge points;
a target edge point acquiring module, configured for selecting at least three target edge points from the first edge point and the multiple second edge points.

Optionally, the parameter of the fitted circle includes position coordinate of the fitted circle, the above apparatus further includes:
a to-be-identified region generating module, configured for generating a to-be-identified region based on the position coordinate of the fitted circle;
a to-be-identified region identifying module, configured for performing circle identifying in the to-be-identified region to obtain an identification result, which includes the parameter of the identified circle.

Optionally, the position coordinate of the fitted circle include center coordinate of the fitted circle and a radius of the fitted circle, the to-be-identified region generating module includes:
a feature parameter calculating module, configured for performing calculation based on the radius of the fitted circle to obtain a feature parameter of a to-be-identified region to be generated with a preset shape, wherein the preset shape is a circle or a rectangle, and the feature parameter is the radius of the circle or a length and width of the rectangle;
a feature parameter generating module, configured for generating the to-be-identified region based on the feature parameter, with the center coordinate of the fitted circle as a center of the to-be-identified region to be generated.

Optionally, the position coordinate of the fitted circle include center coordinate of the fitted circle and the radius of the fitted circle, the to-be-identified region generating module includes:
an inner and outer diameters calculating submodule, configured for performing calculation based on the center coordinate of the fitted circle and the radius of the fitted circle to obtain inner and outer diameters of an annular to-be-identified region;
an annular region generating submodule, configured for generating the annular to-be-identified region based on the inner and outer diameters of the annular to-be-identified region, with the center coordinate of the fitted circle as a center.
a to-be-identified region identifying module, specifically configured for identifying a circle in the annular to-be-identified region to obtain the identification result.

Optionally, the inner and outer diameters calculating submodule is specifically configured for calculating a sum of the radius of the fitted circle and the width of a preset annular region to obtain the outer diameter of the to-be-identified region; calculating a difference between the radius of the fitted circle and the width of the preset annular region to obtain the inner diameter of the to-be-identified region;
optionally, the second edge point detecting module is specifically configured for performing pixel gradient identification on individual pixel points along clockwise and counterclockwise directions of the first edge point within the second preset range around the first edge point, to obtain the multiple second edge points.

Optionally, the first edge point detecting module is specifically configured for performing pixel gradient identification on individual pixel points in multiple preset directions within the first preset range around the target reference point in the to-be-identified image, to obtain the first edge point.

Optionally, the first edge point detecting module includes:
a direction selecting submodule, configured for selecting a direction every preset angle span based on a preset reference direction, within the first preset range around the target reference point in the to-be-identified image, to obtain multiple target directions;
a pixel identifying submodule, configured for performing pixel gradient identification on individual pixel points in the preset reference direction and multiple target directions, to obtain the first edge point.

Optionally, the target edge point obtaining module is specifically configured for down-sampling multiple second edge points to obtain at least three third sampled edge points;
a circle fitting module is specifically configured for performing circle fitting based on the at least three the third sampled edge points to obtain a fitted circle.

Optionally, the to-be-identified region identifying module, includes:
an area comparing submodule, configured for comparing an area of the to-be-identified region with that of the fitted circle;
a region updating submodule, configured for generating an updated to-be-identified region based on the target reference point and the size of a preset region, when a ratio of the area of the to-be-identified region to that of the fitted circle is greater than a preset threshold;
an updated region identification submodule, configured for identifying the circle in the updated to-be-identified region, to obtain the identification result.

Optionally, the edge point selecting module 602 includes:
a region information receiving submodule, configured for receiving to-be-identified region information from the user, wherein the to-be-identified region information includes the size and position of the to-be-identified region input by the user;
an region edge extraction submodule, configured for performing edge extraction in the to-be-identified region based on the target reference point as a reference, to obtain at least three target edge points.

It can be seen that through the apparatus of the embodiment of the present application, the circle search can be achieved by a user merely inputting a point near an edge of a circular pattern, thus simplifying the user operation process.

An embodiment of the present application further provides an electronic device, as shown in Figure 7, which includes a processor 701, a communication interface 702, a memory 703, and a communication bus 704, wherein the processor 701, the communication interface 702, and the memory 703 communicate with each other through a communication bus 704,
the memory 703 is configured for storing a computer program;
the processor 701 is configured for implementing the following steps when executing programs stored on the memory 703:
   acquiring a target reference point in a to-be-identified image, wherein the to-be-identified image contains a circular pattern, and the target reference point is a point with a distance from an edge of the circular pattern is less than a preset distance threshold;
   performing edge extraction based on the target reference point as a reference to obtain at least three target edge points;
   performing circle fitting based on the at least three target edge points, to obtain a fitted circle.

The communication bus mentioned in the above electronic device can be a Peripheral Component Interconnect (PCI) standard bus or an Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface is configured for the communication between the above electronic device and other devices.

The memory may include a Random Access Memory (RAM), and can also include a Non-Volatile Memory (NVM), such as at least one disk memory. Optionally, the memory may also be at least one storage device located far away from the aforementioned processor.

The above processor can be a general-purpose processor, including a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

In yet another embodiment provided by the present application, a computer-readable storage medium is further provided, which stores a computer program therein that implements any step of the circle search method above when executed by the processor.

In yet another embodiment provided by the present application, a computer program product containing instructions is further provided, that when running on a computer, cause the computer to carry out any one of the circle search method described in the above embodiments.

In the above embodiment, it can be realized in whole or in part by software, hardware, firm ware or any combination thereof. When implemented by software, it can be realized in the form of a computer program product in whole or in part. The computer program product includes one or more computer instructions. When the computer program instructions are loaded and executed on the computer, the processes or functions described in the embodiments of the present application are generated in whole or in part. The computer can be a general purpose computer, a special purpose computer, a computer network, or other programmable devices. The computer instructions can be stored in a computer-readable storage medium, or transferred from one computer-readable storage medium to another. For example, the computer instructions can be transferred from a website, a computer, a server or data center to another website site, computer, server or data center by wire (such as coaxial cable, optical fiber, digital subscriber line (DSL)) or wireless (such as infrared, wireless, microwave, etc.). The computer-readable storage medium can be any available medium that can be accessed by a computer or a data storage device such as a server, a data center and the like that includes an integration of one or more available medium. The available media can be magnetic media (for example, floppy disk, hard disk, magnetic tape), optical media (for example, DVD), or semiconductor media (for example, solid state disk (SSD)).

It should be noted that in this article, relational terms such as first and second are only used to distinguish one entity or operation from another, and do not necessarily require or imply any such actual relationship or order between these entities or operations. Moreover, the terms "comprising", "including", or any other variations thereof are intended to encompass non-exclusive inclusion, such that a process, method, item, or device that includes a series of elements not only includes those elements, but also includes other elements not explicitly listed or other elements inherent to such a process, method, item or device. Without further limitation, the elements defined by the phrase "including one..." do not preclude the presence of additional identical elements in a process, method, item or device that includes the mentioned elements.

The various embodiments in this specification are described in a relevant manner. Each embodiment focuses on the differences from other embodiments, and the same and similar parts between the various embodiments can be referred to each other. In particular, for the embodiments of apparatus, electronic device, storage medium and computer program product, the description is relatively simple because it is basically similar to the embodiment of the method, and the relevant points can be referred to the partial description of the embodiment of the method.

The above is only a preferred embodiment of the present application and is not intended to limit the scope of protection of the present application. Any modification, equivalent replacement, improvement, etc. made within the spirit and principles of the present application shall be included in the scope of protection of the present application.

## Claims

1. A circle search method, which comprises:
acquiring a target reference point in a to-be-identified image, wherein the to-be-identified image contains a circular pattern, and the target reference point is arranged in a preset range of an edge of the circular pattern;
performing edge extraction based on the target reference point as a reference to obtain at least three target edge points;
performing circle fitting based on the at least three target edge points, to obtain a fitted circle.

2. The method according to claim 1, wherein performing the edge extraction based on the target reference point as the reference to obtain the at least three target edge points, comprises:
performing pixel gradient identification on individual pixel points within a first preset range around the target reference point in the to-be-identified image, to obtain a first edge point, wherein a pixel gradient of the first edge point is greater than a preset gradient threshold;
performing pixel gradient identification on individual pixel points within a second preset range around the first edge point, to obtain multiple second edge points;
selecting the at least three target edge points from the first edge point and the multiple second edge points.

3. The method according to claim 2, wherein a parameter of the fitted circle comprises a position coordinate of the fitted circle, after performing the circle fitting based on the at least three target edge points to obtain the fitted circle, the method further comprises:
generating a to-be-identified region based on the position coordinate of the fitted circle;
performing circle identifying in the to-be-identified region, to obtain an identification result, wherein the identification result comprises a parameter of an identified circle.

4. The method according to claim 3, wherein the position coordinate of the fitted circle comprise a center coordinate of the fitted circle and a radius of the fitted circle, generating the to-be-identified region based on the position coordinate of the fitted circle comprises:
performing calculation based on the radius of the fitted circle to obtain a feature parameter of a to-be-identified region to be generated with a preset shape, wherein the preset shape is a circle or a rectangle, and the feature parameter is the radius of the circle or a length and width of the rectangle;
generating the to-be-identified region based on the feature parameter, with the center coordinate of the fitted circle as a center of the to-be-identified region to be generated.

5. The method according to claim 3, wherein the position coordinate of the fitted circle comprise a center coordinate of the fitted circle and a radius of the fitted circle, generating the to-be-identified region based on the position coordinate of the fitted circle comprises:
performing calculation based on the center coordinate of the fitted circle and the radius of the fitted circle to obtain inner and outer diameters of an annular to-be-identified region;
generating the annular to-be-identified region based on the inner and outer diameters of the annular to-be-identified region, with the center coordinate of the fitted circle as a center;
identifying the circle in the to-be-identified region to obtain the identification result, comprises:
identifying the circle in the annular to-be-identified region to obtain the identification result.

6. The method according to claim 5, wherein performing calculation based on the center coordinate of the fitted circle and the radius of the fitted circle to obtain the inner and outer diameters of the annular to-be-identified region, comprises:
calculating a sum of the radius of the fitted circle and a width of a preset annular region to obtain an outer diameter of the to-be-identified region; calculating a difference between the radius of the fitted circle and the width of the preset annular region to obtain an inner diameter of the to-be-identified region.

7. The method according to claim 2, wherein performing the pixel gradient identification on the individual pixel points within the second preset range around the first edge point, to obtain the multiple second edge points, comprises:
performing pixel gradient identification on individual pixel points along clockwise and counterclockwise directions of the first edge point within the second preset range around the first edge point, to obtain the multiple second edge points.

8. The method according to claim 2, wherein performing the pixel gradient identification on the individual pixel points within the first preset range around the target reference point in the to-be-identified image, to obtain the first edge point, comprises:
performing pixel gradient identification on individual pixel points in multiple preset directions within the first preset range around the target reference point in the to-be-identified image, to obtain the first edge point.

9. The method according to claim 8, wherein performing the pixel gradient identification on the individual pixel points in the multiple preset directions within the first preset range around the target reference point in the to-be-identified image, to obtain the first edge point, comprises:
selecting a direction every preset angle span based on a preset reference direction, within the first preset range around the target reference point in the to-be-identified image, to obtain multiple target directions;
performing pixel gradient identification on individual pixel points in the preset reference direction and the multiple target directions, to obtain the first edge point.

10. The method according to claim 2, wherein selecting the at least three target edge points from the first edge point and the multiple second edge points, comprises:
down-sampling the multiple second edge points to obtain at least three third sampled edge points;
performing the circle fitting based on the at least three target edge points, to obtain the fitted circle, comprises:
performing circle fitting based on the at least three third sampled edge points, to obtain the fitted circle.

11. The method according to claim 3, wherein performing the circle identifying in the to-be-identified region to obtain the identification result, comprises:
comparing an area of the to-be-identified region with that of the fitted circle;
generating an updated to-be-identified region, based on the target reference point and a size of a preset region, when a ratio of the area of the to-be-identified region to that of the fitted circle is greater than a preset threshold;
identifying the circle in the updated to-be-identified region, to obtain the identification result.

12. The method according to claim 1, wherein performing the edge extraction based on the target reference point as the reference to obtain the at least three target edge points, comprises:
receiving to-be-identified region information from a user, wherein the to-be-identified region information comprises a size and a position of the to-be-identified region input by the user;
performing edge extraction in the to-be-identified region based on the target reference point as a reference, to obtain the at least three target edge points.

13. A circle search apparatus, which comprises:
a reference point acquiring module, configured for acquiring a target reference point in a to-be-identified image, wherein the to-be-identified image contains a circular pattern, and the target reference point is arranged in a preset range of an edge of the circular pattern;
a first edge point detecting module, configured for performing pixel gradient identification on individual pixel points within a first preset range around the target reference point in the to-be-identified image, to obtain the first edge point, wherein a pixel gradient of the first edge point is greater than a preset gradient threshold;
a second edge point detecting module, configured for performing pixel gradient identification on individual pixel points within a second preset range around the first edge point, to obtain multiple second edge points;
a target edge point acquiring module, configured for selecting at least three target edge points from the first edge point and the multiple second edge points;
a circle fitting module, configured for performing circle fitting based on the at least three target edge points to obtain a fitted circle.

14. An electronic device, which comprises a processor, a communication interface, a memory, and a communication bus, wherein the processor, the communication interface, and the memory communicate with each other through the communication bus;
the memory is configured for storing a computer program;
the processor is configured for implementing steps of the method according to any one of claims 1-12 when executing the program stored on the memory.

15. A computer-readable storage medium, which stores a computer program therein, wherein the computer program, when executed by a processor, implements steps of the method according to any one of claims 1-12.
